# FASCICULE DE BREVET EUROPEEN

(11) **EP 2 399 828 B1**
(45) Date de publication et mention de la délivrance du brevet: **26.09.2012**
(21) Numéro de dépôt: 11004331.2
(22) Date de dépôt: 26.05.2011
(51) Int. Cl.: B64D 33/02, F02C 7/055, B64D 15/16

(54) **Procédé pour éviter le colmatage d'une grille, grille et entrée d'air mettant en oeuvre un tel procédé**
Verfahren zur Verschmutzungsvermeidung eines Gitters, Gitter und Lufteinlass zur Umsetzung eines solchen Verfahrens
Method for preventing the clogging of a grating, grating and air intake implementing such a method

(30) Priorité: 24.06.2010 FR 1002639
(43) Date de publication de la demande: 28.12.2011
(73) Titulaire: EUROCOPTER, 13725 Marignane Cédex (FR)
(72) Inventeur: Ameyugo, Gregorio, 31700 Blagnac (FR)
(74) Mandataire: GPI & Associés

(56) Documents cités:
- DE-A1-102008 007 469
- GB-A- 626 571
- US-A1- 2009 101 760

## Description

La présente invention concerne une grille d'entrée d'air et notamment une entrée d'air d'une installation motrice d'un aéronef, un aéronef muni d'une voilure tournante par exemple.

Le domaine technique de l'invention est plus particulièrement restreint au domaine de lutte contre le givre des grilles d'entrée d'air.

En particulier, les giravions devant fonctionner dans des environnements variés et dans des conditions extrêmes, le ou les turbomoteurs de ce giravion doivent être protégés pour supporter de telles conditions.

En effet, pour alimenter un turbomoteur de giravion en air, on équipe ce turbomoteur d'une entrée d'air, cette entrée d'air étant pourvue d'un conduit reliant le turbomoteur à l'air extérieur. On distingue deux types d'entrée d'air, à savoir :
- une entrée d'air dynamique alimentée en air extérieur sous l'effet d'une part de la vitesse d'avancement de l'aéronef et, d'autre part, de l'aspiration requise par le turbomoteur, et
- une entrée d'air statique uniquement alimentée en air sous l'effet de l'aspiration requise par le turbomoteur.

Pour éviter l'ingestion par le turbomoteur de corps solides susceptibles de l'endommager, des oiseaux par exemple, il est courant de protéger une entrée d'air à l'aide d'une grille. Lesdits corps solides sont alors bloqués par la grille et ne risquent pas de pénétrer à l'intérieur du turbomoteur.

Bien qu'efficace, cette solution présente un inconvénient dans des conditions de vol dites givrantes, et plus particulièrement pour les entrées d'air dynamiques. Dans de telles conditions de vol, le givre se dépose sur la grille et obture de fait partiellement, voire même totalement, les interstices de cette grille.

Par suite, l'entrée d'air est partiellement voire totalement obturée. L'alimentation en air du turbomoteur est donc diminuée voire supprimée, ce qui implique une baisse importante voire totale de la puissance développée par ce turbomoteur pouvant conduire à un incident.

Pour y remédier, il est alors concevable d'utiliser une grille surdimensionnée. L'entrée d'air dynamique comportant une surface de passage par laquelle l'air pénètre dynamiquement dans l'entrée d'air dynamique, la grille de protection comporte une première et une deuxième sections de passage de l'air, la première section de passage étant en regard de la surface de passage contrairement à la deuxième section de passage. De façon imagée, la grille est une sorte de chapeau de champignon venant recouvrir l'entrée d'air dynamique.

Ainsi, seule la première section de passage est susceptible de capter le givre. En conditions givrantes, la deuxième section de passage garantit alors un débit d'air minimum.

On note que les constructeurs d'aéronefs ont donc conçu des dispositifs variés pour protéger les entrées d'air des turbomoteurs de manière à empêcher l'ingestion de particules de tout type par ces turbomoteurs. Par exemple, on connaît alors par le document FR2250671 une entrée d'air polyvalente pouvant d'une part éviter l'ingestion de particules par le turbomoteur et, d'autre part, autoriser un vol en conditions givrantes sans avoir des dégradations de performances importantes du turbomoteur.

Le document US 4393650 est éloigné de l'invention en ayant trait à une turbine à gaz munie d'un carénage tournant pointu, et non pas une grille fixe. Ce carénage tournant comporte une extrémité conique rigide suivie d'une partie tronconique flexible en rotation pour casser des plaques de givre se déposant sur le carénage.

De même, le document GB 663194 présente un écran rotatif muni de câbles allongés selon une direction radiale, cet écran coopérant avec une gorge annulaire drainée par une tuyauterie.

Ainsi, le givre déposé sur les câbles est expulsé vers la gorge puis évacué par la tuyauterie. Il est possible par ailleurs d'injecter un fluide de dégivrage sur les câbles.

Le document US 5411224 présente une grille munie d'une portion avant et d'une portion arrière, la portion arrière comportant des éléments rigides pointus pour découper des corps étrangers susceptibles de traverser la grille.

Le document GB 626 571 A (WESTINGHOUSE ELECTRIC INT CO) montre une grille d'entrée d'air et (implicitement) un procédé pour éviter le colmatage d'une grille avec toutes les caractéristiques techniques des préambules des revendications 1 et 2.

La présente invention a alors notamment pour objet de proposer un procédé et une grille optimisée pour fonctionner en conditions givrantes.

Ainsi, l'invention vise un procédé (revendication 1) pour éviter le colmatage d'une grille fixe d'entrée d'air dans des conditions givrantes, la grille comportant un maillage pourvu d'une pluralité d'éléments allongés, deux éléments allongés adjacents se croisant en un noeud, chaque élément allongé s'étendant selon une direction d'allongement entre un premier noeud et un deuxième noeud.

La grille comporte alors un maillage usuel. Un tel maillage peut être obtenu à l'aide de barreaux s'entrecroisant à claire voie par exemple, chaque élément allongé représentant un segment d'un barreau disposé entre deux noeuds, chaque noeud représentant une intersection entre deux barreaux. Les barreaux sont parfois dénommés « fils »

Selon ce procédé, on dispose autour d'au moins un élément allongé un organe antigivre vibrant, sous l'effet de vortex générés par un dépôt de givre sur ledit organe antigivre lors du passage du flux de l'air entrant dans l'entrée d'air moteur.

Ainsi, l'invention permet d'éviter la formation de givre sur une grille n'ayant pas un mouvement rotatif, à l'inverse de certains enseignements.

De manière surprenante, on constate que le dépôt de givre introduit une modification de la forme de l'ensemble incluant l'organe antigivre et le givre.

En effet, en conditions normales, lorsque la grille est traversée par un écoulement d'air, cet écoulement d'air se sépare au contact de chaque élément allongé ce qui génère la création simultanée de deux vortex en arrière de la grille.

Par contre, durant un vol en conditions givrantes, du givre adhère sur l'organe antigivre recouvrant l'élément allongé et plus précisément sur une portion dénommée « portion amont » par commodité en prenant comme référence la direction de l'écoulement d'air.

Le dépôt de givre entraîne une perturbation modifiant la forme de l'ensemble givre/ organe antigivre, en la rendant asymétrique par rapport au sens de l'écoulement par exemple. Il en résulte la création non plus simultanée mais alternée de deux vortex de part et d'autre de l'organe antigivre. Ce décalage dans la création des vortex est à l'origine de la vibration de l'organe vibrant et notamment de sa portion amont.

Cette vibration génère une cassure de l'amas de givre sur la portion amont de l'organe antigivre. Le givre se sépare alors de la grille.

Ce procédé permet donc d'éviter le colmatage d'une grille.

On note que le phénomène physique provoquant la vibration de l'organe antigivre est parfois dénommé « vortex-induced vibrations » en langue anglaise ou connu sous l'acronyme « V.I.V ».

De plus, un tel phénomène génère des turbulences en aval de l'obstacle représenté par la grille, ces turbulences étant connues sous le nom de « allées de tourbillons de Karman ». Toutefois, ces turbulences ne sont étonnamment pas gênantes dans la mesure où elles disparaissant lorsque l'amas de givre se détache de l'organe antigivre.

Le procédé est optimisé lorsque la portion amont de l'organe antigivre est réalisée dans une matière élastique. On note que la portion amont représente de fait le bord d'attaque de l'organe antigivre.

Outre un procédé, l'invention vise une grille d'entrée d'air (revendication 2) apte à mettre en oeuvre ce procédé.

Selon l'invention, une grille d'entrée d'air comporte alors un maillage pourvu d'éléments allongés, deux éléments allongés adjacents se croisant en un noeud, chaque élément allongé s'étendant selon une direction d'allongement entre un premier noeud et un deuxième noeud.

De plus, la grille est remarquable en ce qu'au moins un élément allongé est entouré par au moins un organe antigivre, cet organe antigivre comportant une portion aval agencée sur l'élément allongé correspondant ainsi qu'une portion amont allongée et élastique vibrant sous l'effet de vortex générés par un écoulement d'air traversant la grille suite à un dépôt de givre sur la portion amont, la portion aval étant en aval de ladite portion amont par rapport audit écoulement d'air.

La portion aval présente un profil ne générant pas la formation de tourbillons en l'absence de givre, en étant par exemple conformée à cet élément allongé.

Ainsi, la grille comporte un revêtement muni d'organes antigivre disposés sur ses éléments allongés.

En cas de dépôt de givre sur la portion amont de l'organe antigivre, le phénomène explicité précédemment entraîne la vibration de cette portion amont et par suite le décollement du givre.

La grille peut comporter une ou plusieurs des caractéristiques qui suivent.

Par exemple, un élément allongé muni d'un organe antigivre a une section elliptique, la portion aval dudit organe antigivre ayant une section elliptique.

Ainsi, on garantit que l'organe antigivre reste dans une position donnée.

Cette caractéristique est particulière, les barreaux d'une grille ayant plutôt des sections circulaires.

Par ailleurs, la portion amont et la portion aval d'un organe antigivre sont solidaires l'une de l'autre. Elles peuvent être distinctes et assemblés par une méthode connue, ou encore former conjointement une pièce d'un seul tenant.

Selon un autre aspect de l'invention, la portion amont est en un matériau choisi parmi le groupe des élastomères.

Conformément à un premier mode de réalisation, entre deux noeuds, un élément allongé comporte une pluralité d'organes antigivre, un espacement séparant deux organes antigivre adjacents.

Selon une première variante de ce premier mode de réalisation, l'espacement est vide.

Selon une deuxième variante de ce premier mode de réalisation, l'espacement comporte un palier séparant deux portions aval de deux organes antigivre adjacents en entourant l'élément allongé entre deux organes antigivre, le palier étant conformé audit élément allongé.

Un élément allongé peut alors comporter une séquence comportant un organe antigivre, un palier et un organe antigivre, cette séquence étant éventuellement reproduite plusieurs fois.

Le palier est éventuellement solidaire des organes antigivre adjacents

Conformément à un deuxième mode de réalisation, un élément allongé comporte un unique organe antigivre s'étendant d'un premier noeud vers un deuxième noeud.

On note que l'on peut obtenir la deuxième variante du premier mode de réalisation en creusant des rainures dans un élément allongé selon le deuxième mode de réalisation

En outre, chaque élément allongé en contact avec l'écoulement d'air traversant la grille comporte avantageusement un organe antigivre.

Enfin, l'invention vise une entrée d'air munie d'une grille de protection, la grille étant une grille selon l'invention.

L'invention et ses avantages apparaîtront avec plus de détails dans le cadre de la description qui suit avec des exemples de réalisation donnés à titre illustratif en référence aux figures annexées qui représentent :
- la figure 1, un schéma illustrant une grille d'un type connu,
- la figure 2, une vue d'une grille selon l'invention agencée dans une entrée d'air schématisée,
- la figure 3, une vue d'un élément allongé muni d'un organe antigivre,
- les figures 4 et 5, des coupes illustrant le procédé mis en oeuvre,
- les figures 6 à 8, des schémas illustrant un premier mode de réalisation, et
- la figure 9, un schéma illustrant un deuxième mode de réalisation.

Les éléments présents dans plusieurs figures distinctes sont affectés d'une seule et même référence.

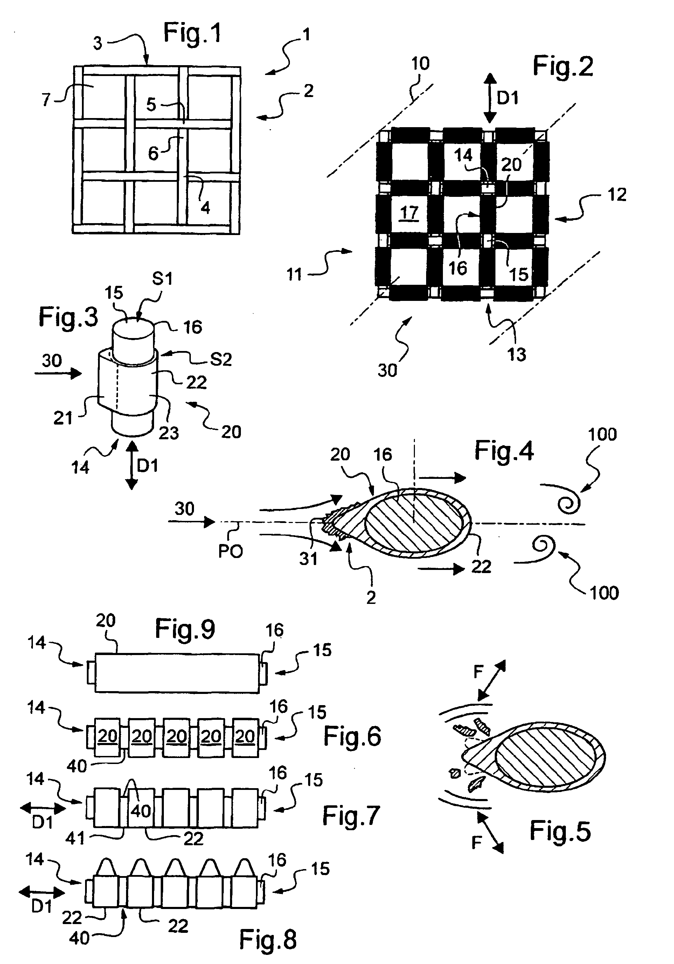

La figure 1 présente une grille 1 d'un type connu apte à protéger une entrée d'air d'une installation motrice par exemple.

Cette grille 1 comporte un maillage 2 pourvu d'orifices 7 délimités par des premiers barreaux 3 et des deuxième barreaux 6 entrelacés, un premier barreau 3 et un deuxième barreau 6 se croisant en un noeud 4, 5.

Chaque barreau comporte une pluralité de segments sous forme d'éléments allongés, chaque élément allongé étant disposé entre un premier noeud 4 et un deuxième noeud 5. Ainsi, chaque maille de la grille comporte un orifice 7 délimité par des éléments allongés allant d'un noeud à un autre noeud.

La figure 1 présente une grille ayant un maillage carré. D'autres types de maillages sont concevables, ces maillages étant néanmoins munis d'orifices délimités par plusieurs éléments allongés, chaque élément allongé allant d'un noeud du maillage à un autre noeud.

Une grille 1 de ce type est efficace pour empêcher la pénétration indue de particules solides dans un moteur par exemple.

Toutefois, dans des conditions givrantes, du givre peut se déposer sur les éléments allongés et colmater le cas échéant les orifices de la grille.

La figure 2 présente une entrée d'air 10 selon l'invention schématisée par des pointillés.

Cette entrée d'air 10 est pourvue d'une grille 11 novatrice.

La grille 11 comprend un maillage 12 pourvu d'une pluralité d'éléments allongés 16, chaque élément allongé s'étendant selon une direction d'allongement D1 d'un premier noeud 14 du maillage à un deuxième noeud 15. Deux éléments allongés 16 adjacents se rejoignent donc à un noeud.

Le maillage peut être obtenu à partir de barreaux s'entrecroisant, chaque barreau ayant une succession d'éléments allongés 16.

Le maillage 12 présenté est de forme carré, un orifice 17 de la grille 11 étant délimité par quatre éléments allongés 16 reliés par quatre noeuds. D'autres formes de maillage sont concevables sans sortir du cadre de l'invention.

Selon l'invention, on dispose autour d'au moins un élément allongé 16 un organe antigivre 20 vibrant sous l'effet de vortex générés par un dépôt de givre sur l'organe antigivre 20. Plus précisément, on dénomme par raison de commodité par l'expression « vibrant sous l'effet de vortex générés par un dépôt de givre » la mise en place du phénomène dénommé « vortex-induced vibrations » en langue anglaise lors de la formation d'un amas de givre sur l'élément allongé.

Favorablement, chaque élément allongé 16 en contact avec l'écoulement d'air 30 traversant la grille comporte un organe antigivre 20.

La figure 3 présente un organe antigivre 20 agencé autour d'un élément allongé 16 s'étendant d'un premier noeud 14 vers un deuxième noeud 15 selon une direction d'allongement D1. On note que la direction d'allongement D1 présente une inclinaison non nulle par rapport à la direction suivie par l'écoulement d'air 30 traversant la grille, en étant perpendiculaire à cet écoulement d'air 30 par exemple.

Cet organe antigivre 20 possède une portion amont 21 pourvue du bord d'attaque de l'organe antigivre par rapport à l'écoulement d'air 30, et une portion aval 22 pourvue du bord de fuite de l'organe antigivre par rapport à l'écoulement d'air 30.

La portion aval 22 est conformée à la forme de l'élément allongé 16 qu'elle entoure selon la version représentée. Toutefois, la portion aval peut aussi posséder un profil aérodynamique ne générant pas en l'absence de givre des tourbillons à l'origine de vibrations de l'organe antigivre.

On note que l'élément allongé 16 peut avoir une section S1 elliptique, la portion aval 22 ayant alors aussi une section S2 elliptique ou carénée. Cette caractéristique permet d'éviter une rotation de l'organe antigivre autour de l'élément allongé.

Par ailleurs, la portion amont a un profil en forme de pointe pour capter le givre. Cette portion est éventuellement en un matériau choisi parmi le groupe des élastomères pour favoriser son élasticité. On peut choisir un élastomère ayant une température de transition vitreuse faible, de l'ordre de -40°C par exemple, pour garantir un fonctionnement acceptable sur l'ensemble du domaine de vol d'un aéronef muni de ladite grille 11.

En référence à la figure 3, la portion amont 21 et la portion aval 22 forment une unique pièce d'un seul tenant, et ne constitue pas deux équipements distincts solidarisés l'un à l'autre.

Selon une autre variante non représentée, la portion amont 21 et la portion aval 22 sont deux pièces distinctes solidarisées l'un à l'autre.

On note qu'indépendamment de la variante, il est possible d'enfiler l'organe antigivre 20 autour de l'élément allongé 16 durant la fabrication de la grille 11.

Une autre technique consiste par exemple à réaliser une ouverture continue au niveau de bord de fuite de la portion amont pour pouvoir agrafer élastiquement l'organe antigivre 20 sur l'élément allongé 16.

Les figures 4 et 5 explicitent le fonctionnement de l'invention.

En référence à la figure 4, en conditions givrantes, un amas de givre peut se former sur la grille 11. La portion amont 21 d'un organe antigivre 20 étant à l'amont des autres organes de la grille 11, le givre s'amoncelle sur cette portion amont 21.

L'écoulement d'air 30 traversant la grille donne alors naissance à des vortex 100, et plus précisément deux vortex 100 décalés l'un par rapport à l'autre en aval de chaque organe antigivre 20.

En référence à la figure 5, ce décalage de vortex 100 entraîne une vibration de l'organe antigivre et notamment de sa portion amont 21. Le mouvement de la portion amont 21 selon les flèches F entraîne la cassure de l'amas de givre et son élimination par entraînement dans l'écoulement d'air.

Aucun mouvement de la grille 11 n'est donc requis pour permettre une telle cassure.

Pour favoriser la cassure, il est envisageable de chauffer les éléments allongés à l'aide de moyens usuels.

Les figures 6 à 8 présentent un premier mode de réalisation.

Selon ce premier mode de réalisation, une pluralité d'organes antigivre 20 sont agencés sur un même élément allongé 16 entre deux noeuds 14, 15.

Un espacement 40 sépare alors deux organes antigivre 20 adjacents d'un même élément allongé 16.

Selon une première variante de ce premier mode de réalisation représentée sur la figure 6, l'espacement 40 est vide.

A l'inverse, selon une deuxième variante de ce premier mode de réalisation représentée sur les figures 7 et 8, l'espacement 40 est muni d'un palier 41 entourant l'élément allongé entre deux portions aval 22 de deux organes antigivre 20 adjacents d'un même élément allongé 16. On comprend que lesdites deux portions aval 22 de deux organes antigivre 20 adjacents peuvent être solidarisées au palier 41 les séparant.

Les figures 7 et 8 présentent de plus deux variantes différentes de la portion amont 21 des organes antigivre 20. La portion amont 21 couvre totalement la portion aval 22 d'un organe antigivre 20 selon la direction d'allongement D1 selon la variante de la figure 7, et couvre partiellement la portion aval 22 d'un organe antigivre 20 selon la direction d'allongement D1 selon la variante de la figure 8.

Enfin, selon le deuxième mode de réalisation de la figure 9, un élément allongé 16 comporte un unique organe antigivre 20 s'étendant d'un premier noeud 14 vers un deuxième noeud 15.

On remarque qu'en usinant un tel organe antigivre, il est possible d'obtenir la deuxième variante du premier mode de réalisation.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour éviter le colmatage d'une grille (11) fixe d'entrée d'air (10) dans des conditions givrantes, ladite grille (11) comportant un maillage (12) pourvu d'une pluralité d'éléments allongés (16), deux éléments allongés (16) adjacents se croisant en un noeud (14, 15), chaque élément allongé (16) s'étendant selon une direction d'allongement (D1) entre un premier noeud (14) et un deuxième noeud (15),
**caractérisé en ce que** l'on dispose autour d'au moins un élément allongé (16) un organe antigivre (20) vibrant sous l'effet de vortex générés par un dépôt de givre sur ledit organe antigivre (20).

2. Grille (11) d'entrée d'air comportant un maillage (12) pourvu d'éléments allongés (16), deux éléments allongés (16) adjacents se croisant en un noeud (14, 15), chaque élément allongé (16) s'étendant selon une direction d'allongement (D1) entre un premier noeud (14) et un deuxième noeud (15),
**caractérisée en ce qu'**au moins un élément allongé (16) est entouré par au moins un organe antigivre (20), ledit organe antigivre (20) comportant une portion aval (22) agencée sur ledit élément allongé (16) correspondant ainsi qu'une portion amont (21) allongée et élastique vibrant sous l'effet de vortex générés par un écoulement d'air (30) traversant ladite grille (11) suite à un dépôt (31) de givre sur ladite portion amont (21), ladite portion aval (22) étant en aval de ladite portion amont (21) par rapport audit écoulement d'air (30).

3. Grille selon la revendication 2,
**caractérisée en ce qu'**un élément allongé (16) muni d'un organe antigivre (20) a une section (S1) elliptique, ladite portion aval (22) dudit organe antigivre (20) ayant une section (S2) elliptique.

4. Grille selon l'une quelconque des revendications 2 à 3,
**caractérisée en ce que** ladite portion amont (21) et ladite portion aval (22) forment conjointement une pièce (23) d'un seul tenant.

5. Grille selon l'une quelconque des revendications 2 à 4,
**caractérisée en ce que** ladite portion amont (21) est en un matériau choisi parmi le groupe des élastomères.

6. Grille selon l'une quelconque des revendications 2 à 5,
**caractérisée en ce que**, entre deux noeuds (14, 15), un élément allongé (16) comporte une pluralité d'organes antigivre (20), un espacement (40) séparant deux organes antigivre (20) adjacents.

7. Grille selon la revendication 6,
**caractérisée en ce que** ledit espacement (40) comporte un palier (41) conformé audit élément allongé (16) séparant deux portions aval (22) de deux organes antigivre (20) adjacents.

8. Grille selon l'une quelconque des revendications 2 à 5,
**caractérisée en ce qu'**un élément allongé (16) comporte un unique organe antigivre (20) s'étendant d'un premier noeud (14) vers un deuxième noeud (15).

9. Grille selon l'une quelconque des revendications 2 à 8,
**caractérisée en ce que** chaque élément allongé (16) en contact avec ledit écoulement d'air (30) comporte un organe antigivre (20).

10. Entrée d'air (10) munie d'une grille (11) de protection,
**caractérisée en ce que** ladite grille (11) est selon l'une quelconque des revendications 2 à 9.

## Claims

1. Method of avoiding clogging of a stationary grid (11) of an air intake (10) in icing conditions, said grid (11) comprising a mesh (12) provided with a plurality of elongate elements (16), two adjacent elongate elements (16) crossing at a node (14, 15), each elongate element (16) extending in a long direction (D1) between a first node (14) and a second node (15),
**characterised in that** an anti-icing member (20) is placed around at least one elongate element (16), the anti-icing member vibrating under the effect of vortices generated by a deposit of ice on said anti-icing member (20).

2. Air intake grid (11) comprising a mesh (12) provided with elongate elements (16), two adjacent elongate elements (16) crossing at a node (14, 15), each elongate element (16) extending in a long direction (D1) between a first node (14) and a second node (15),
**characterised in that** at least one elongate element (16) is surrounded by at least one anti-icing member (20), said anti-icing member (20) having a downstream portion (22) arranged on said corresponding elongate element (16), and an elongate and resilient upstream portion (21) that vibrates under the effect of vortices generated by a flow of air (30) passing through said grid (11) as a result of a deposit (31) of ice on said upstream portion (21), said downstream portion (22) being downstream from said upstream portion (21) relative to said flow of air (30).

3. Grid according to Claim 2, **characterised in that** an elongate element (16) provided with an anti-icing member (20) has an elliptical section (S1), said downstream portion (22) of said anti-icing member (20) having an elliptical section (S2).

4. Grid according to any one of Claims 2 to 3,
**characterised in that** said upstream portion (21) and said downstream portion (22) together form a one-piece part (23).

5. Grid according to any one of Claims 2 to 4,
**characterised in that** said upstream portion (21) is made of a material selected from the group of elastomers.

6. Grid according to any one of Claims 2 to 5,
**characterised in that**, between two nodes (14, 15), an elongate element (16) has a plurality of anti-icing members (20), with spacing (40) separating two adjacent anti-icing members (20).

7. Grid according to Claim 6,
**characterised in that** said spacing (40) has a bearing (41) matching the shape of said elongate element (16) and separating two downstream portions (22) of two adjacent anti-icing members (20).

8. Grid according to any one of Claims 2 to 5,
**characterised in that** an elongate element (16) has a single anti-icing member (20) extending from a first node (14) towards a second node (15).

9. Grid according to any one of Claims 2 to 8,
**characterised in that** each elongate element (16) in contact with said flow of air (30) has an anti-icing member (20).

10. Air intake (10) provided with a protective grid (11),
**characterised in that** said grid (11) is a grid according to any one of Claims 2 to 9.

## Patentansprüche

1. Verfahren zur Verschmutzungsvermeidung eines Gitters (11), welches an einem Lufteinlass (10) befestigt ist, unter Frostbedingungen, wobei das Gitter (11) ein Netzwerk (12) aufweist mit einer Mehrzahl länglicher Elemente (16), wobei zwei benachbarte längliche Elemente (16) sich in einem Knoten (14, 15) kreuzen, wobei sich jedes längliche Element (16) in einer Erstreckungsrichtung (D1) zwischen einem ersten Knoten (14) und einem zweiten Knoten (15) erstreckt,
**dadurch gekennzeichnet, dass** man um mindestens ein längliches Element (16) ein Antifrostorgan (20) anordnet, welches unter Einwirkung von Wirbeln vibriert, die durch einen Niederschlag von Eis auf dem Antifrostorgan (20) erzeugt werden.

2. Lufteinlassgitter (11) mit einem Netzwerk (12), welches mit länglichen Elementen (16) versehen ist, wobei zwei benachbarte längliche Elemente (16) sich zu einem Knoten (14,15) kreuzen, wobei jedes längliche Element (16) sich in einer Erstreckungsrichtung (D1) zwischen einem ersten Knoten (14) und einem zweiten Knoten (15) erstreckt,
**dadurch gekennzeichnet, dass** mindestens ein längliches Element (16) umgeben ist von mindestens einem Antifrostorgan (20), wobei das Antifrostorgan (20) einen hinteren Bereich (22) aufweist, der auf dem entsprechenden länglichen Element (16) angeordnet ist, sowie einen vorderen länglichen und elastischen Bereich (21), der unter der Wirkung von Wirbeln vibriert, die durch eine Luftströmung (30) erzeugt werden, die das Gitter (11) durchquert, infolge eines Eisniederschlags (31) auf dem vorderen Bereich (21), wobei der hintere Bereich (22) bezüglich der Luftströmung (30) hinter dem vorderen Bereich (21) liegt.

3. Gitter nach Anspruch 2,
**dadurch gekennzeichnet, dass** ein längliches Element (16), welches mit einem Antifrostorgan (20) versehen ist, einen elliptischen Querschnitt (S1) aufweist, wobei der hintere Bereich (22) des Antifrostorgans (20) einen elliptischen Querschnitt (S2) aufweist.

4. Gitter nach einem der Ansprüche 2 oder 3,
**dadurch gekennzeichnet, dass** der vordere Bereich (21) und der hintere Bereich (22) zusammen ein einstückiges Teil (23) bilden.

5. Gitter nach einem der Ansprüche 2 bis 4,
**dadurch gekennzeichnet, dass** der vordere Bereich (21) aus einem Elastomermaterial besteht.

6. Gitter nach einem der Ansprüche 2 bis 5,
**dadurch gekennzeichnet, dass** zwischen zwei Knoten (14, 15) ein längliches Element (16) eine Mehrzahl von Antifrostorganen (20) aufweist, wobei ein Abstandshalter (40) zwei benachbarte Antifrostorgane (20) voneinander trennt.

7. Gitter nach Anspruch 6,
**dadurch gekennzeichnet, dass** der Abstandshalter (40) ein Lager (41) aufweist, welches an das längliche Element (16) angepasst ist und die beiden hinteren Bereiche (22) von zwei benachbarten Antifrostorganen (20) trennt.

8. Gitter nach einem der Ansprüche 2 bis 5,
**dadurch gekennzeichnet, dass** ein längliches Element (16) ein einziges Antifrostorgan (20) aufweist, welches sich von einem ersten Knoten (14) bis zu einem zweiten Knoten (15) erstreckt.

9. Gitter nach einem der Ansprüche 2 bis 8,
**dadurch gekennzeichnet, dass** jedes längliche Element (16), welches in Kontakt mit der Luftströmung (30) ist, ein Antifrostorgan (20) aufweist.

10. Lufteinlass (10) mit einem Schutzgitter (11),
**dadurch gekennzeichnet, dass** das Gitter (11) ein Gitter gemäß einem der Ansprüche 2 bis 9 ist.
